(19) Europäisches Patentamt
European Patent Office
Office européen des brevets

(11) **EP 1 818 892 A1**

(12) **EUROPEAN PATENT APPLICATION**
published in accordance with Art. 158(3) EPC

(43) Date of publication:
**15.08.2007 Bulletin 2007/33**

(51) Int Cl.:
*G09B 29/00* (2006.01)  *G01C 21/00* (2006.01)
*H03M 7/40* (2006.01)

(21) Application number: **05811747.4**

(22) Date of filing: **30.11.2005**

(86) International application number:
**PCT/JP2005/022014**

(87) International publication number:
**WO 2006/059656 (08.06.2006 Gazette 2006/23)**

(84) Designated Contracting States:
**GB**

(30) Priority: **30.11.2004  JP 2004346733**

(71) Applicant: **MATSUSHITA ELECTRIC INDUSTRIAL CO., LTD.**
**Osaka 571-8501 (JP)**

(72) Inventors:
• **ADACHI, Shinya**
**Matsushita Electric Ind. Co., Ltd.**
**Osaka-shi, Osaka 540-6319 (JP)**

• **YAMASHITA, Tetsuro**
**Matsushita Electric Ind. Co.**
**Osaka-shi, Osaka 540-6319 (JP)**

• **TAKABE, Yoshiyuki**
**Matsushita Electric Ind. Co. Ltd**
**Osaka-shi, Osaka 540-6319 (JP)**

(74) Representative: **Pautex Schneider, Nicole Véronique et al**
**Novagraaf International SA**
**25, Avenue du Pailly**
**1220 Les Avanchets - Geneva (CH)**

(54) **LINEAR OBJECT POSITION DATA GENERATION METHOD AND DEVICE**

(57)    A linear object position data generating method and generating system capable of achieving improvement in efficiency of data transmission by compressing effectively resample data of a linear object like a road profile on a digital map in terms of a resample processing method is provided.

A linear object is resampled at a predetermined resample length, and respective angular information of a plurality of resample points on the linear object, which are set by the resample, are acquired. Then, markers representing additional information corresponding to at least one resample point are set, and incidental code values representing incidental codes of the angular information and the markers are decided. Then, a starting-point block, an angle/marker block, and an incidental-code block are generated, then these blocks are compressed individually, and then these compressed blocks are linked together.

| POSITION CODE ID | STARTING POINT (LONGITUDE) | STARTING POINT (LATITUDE) | ABSOLUTE ANGLE | RESAMPLE LENGTH CHANGE MARKER | RESAMPLE LENGTH CODE [3 BIT] | PREDICTIVE FORMULA CHANGE MARKER | PREDICTIVE FORMULA CODE [2 BIT] | ROAD INCIDENTAL CODE CHANGE MARKER | CLASS CODE FUNCTION CODE OFFSET | NODE 1 ANGLE (QUANTUM ANGLE VALUE) | NONE OR +/- [1BIT] | NODE 2 ANGLE (QUANTUM ANGLE VALUE) | NONE OR +/- [1BIT] | ... | END MARKER | OFFSET |
|---|---|---|---|---|---|---|---|---|---|---|---|---|---|---|---|---|

FIG. 4 (A) STARTING POINT BLOCK

| POSITION CODE ID | STARTING POINT (LONGITUDE) | STARTING POINT (LATITUDE) | ABSOLUTE ANGLE |
|---|---|---|---|

FIG. 4 (B) ANGLE/MARKER BLOCK

| RESAMPLE LENGTH CHANGE MARKER | PREDICTIVE FORMULA CHANGE MARKER | ROAD INCIDENTAL CODE CHANGE MARKER | NODE 1 ANGLE (QUANTUM ANGLE VALUE) | NODE 2 ANGLE (QUANTUM ANGLE VALUE) | ... | END MARKER |
|---|---|---|---|---|---|---|

FIG. 4 (C) INCIDENTAL-CODE BLOCK

| RESAMPLE LENGTH CODE [3 BIT] | PREDICTIVE FORMULA CODE [2 BIT] | CLASS CODE FUNCTION CODE OFFSET | NONE OR +/- [1BIT] | NONE OR +/- [1BIT] | ... | OFFSET |
|---|---|---|---|---|---|---|

**Description**

Technical Field

The present invention relates to a position data generating method and system for representing a linear object like a road profile of a digital map.

Background Art

In the prior art, VICS (Vehicle Information and Communication System) performs the service that provides road traffic information indicating a traffic jam area or a traveling time to a vehicle navigation system equipped with a digital map database through an FM multiplex broadcasting or a beacon. The vehicle navigation system receives this road traffic information, and then puts a color on the traffic jam area in a map displayed on a screen, calculates the time required to a destination to display it, or the like.

In this manner, when the road traffic information is provided, position information of the road on the digital map must be delivered. Further, in the service that receives information about a present address and a destination and then provides information about a recommended route along which the user can arrive at the destination in a shortest time or the road traffic information collection system (probe information collection system) that collects locus information, speed information, and the like from the vehicle (probe car) during running, the research of which is now proceeding, the recommended route or the traveling locus on the digital map must be delivered correctly to the other party.

When a road position on the digital map is delivered, normally the link number assigned to the road or the node number for specifying a node such as an intersection, or the like is used up to now. However, the node number and the link number defined in a road network must be replaced with new ones following upon a new construction or change of the road. According to this, the digital map data produced by respective companies must be updated, so that the maintenance of the system using the node number or the link number entails a great social cost.

In order to improve such drawback, in JP-A-2003-23357, the method of delivering the road position on the digital map without the node number and the link number in a small amount of data is proposed.

According to this method, the sampling points are reset on the road block on the delivered digital map at a predetermined distance interval (this is referred to as an "constant distant-resample" hereinafter), the compressed coding process is applied to a data array in which position data of respective sampling points are aligned in order, and compressed coded data are transmitted. The receiver side, when received the data, restores the data array of position data of the sampling points, and then reconstructs the road profile on own digital map. Further, as the case may be, the road block is specified by executing the position pointing and the position reference on own digital map using the position data (map matching).

The compressed coding applied to the data array of position data is executed in order of (1) conversion of position data into a single variable, (2) conversion of values represented by the single variable into a value having a bias statistically, and (3) variable-length coding of the converted value, as given in the following.

(1) Conversion of position data into a single variable

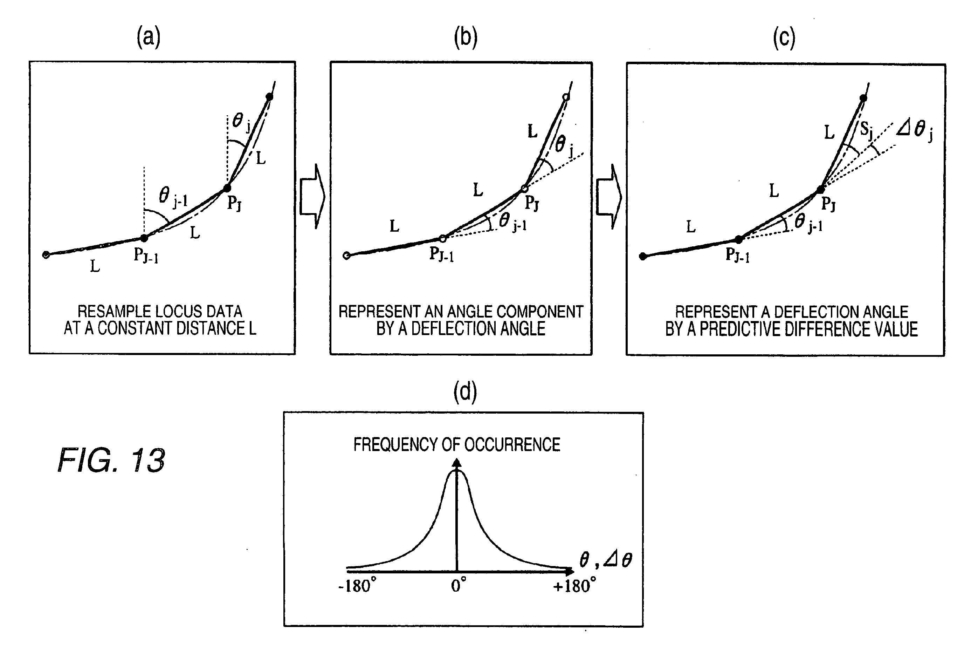

In FIG. 13 (a), the sampling points on the road block being set by the constant distant-resample are represented by $P_{J-1}$, $P_J$. The sampling point ($P_J$) can be specified uniquely by two dimensions of a distance (resample length) L from the adjacent sampling point ($P_{J-1}$) and an angle $\Theta$. When the distance is constant (L), the adjacent sampling point ($P_{J-1}$) can be represented only by a single variable of an angular component $\Theta$ from the adjacent sampling point ($P_{J-1}$). In FIG. 13(a), an angle given by an "absolute azimuth" that points a size clockwise in a range of 0 to 360 degree from the due north whose azimuth is set to 0 degree (absolute azimuth from the due north) is shown as this angle $\Theta$. This angle $\Theta$ can be calculated by

$$\Theta_{j-1} = \tan^{-1}\{(x_j - x_{j-1}) / (y_j - y_{j-1})\}$$

where $(x_{j-1}, y_{j-1})$ $(x_j, y_j)$ : x, y coordinates (latitude/ longitude) of the points ($P_{J-1}$) ($P_J$).

Therefore, when a constant distance L between the sampling points and the latitude/longitude of the sampling points (reference points) as a starting point and an end point are shown separately, the road block can be represented by the data array of the angular components of respective sampling points.

(2) Conversion of values represented by the single variable into a value having a bias statistically

An angular component of each sampling point is represented by a difference from the angular component of the adjacent sampling point, i.e., an "deflection angle" $\theta_j$, as shown in FIG.13(b), such that the single variable values of respective sampling points that are biased statically to be suited for the variable-length coding. This deflection angle $\theta_j$ is calculated by

$$\theta_j = \Theta_j - \Theta_{j-1}.$$

When the road is linear, the deflection angles $\theta$ of respective sampling points are gathered around 0 and give the data that have a bias statistically.

Further, when the deflection angle $\theta_j$ of the target sampling point $P_J$ is represented by a difference value (predictive difference value or predictive error) $\Delta\theta_j$ from a predictive value $S_j$ of the sampling point $P_J$, which is predicted by using the deflection angles $\theta_{j-1}$, $\theta_{j-2}$, .. of the preceding sampling points $P_{J-1}$, $P_{J-2}$ .., as shown in FIG.13 (c), the angular components of respective sampling points can be converted into the data have a bias statistically. For example, the predictive value $S_j$ can be defined by

$$S_j = \tilde{\theta}_{j-1}$$

or

$$S_j = (\theta_{j-1} + \theta_{j-2})/2.$$

The predictive difference value $\Delta\theta_j$ is calculated by

$$\Delta\theta_j = \theta_{j-1} - S_j.$$

When the road is curved at a constant curvature, the predictive difference values $\Delta\theta$ of respective sampling points are gathered around 0 and give the data that have a bias statistically.

FIG.13 (d) shows a frequency of occurrence of the data as a graph when the linear road block is represented by the deflection angle $\theta$ and when the curved road block is represented by the predictive difference values $\Delta\theta$. The frequencies of occurrence of $\theta$ and $\Delta\theta$ have a maximum at a $\theta$ (or $\Delta\theta$)=0 ° respectively, and have a bias statistically.

(3) Variable-length coding of the converted value

Then, the values of the data array converted into the values have a bias statistically are subjected to the variable-length coding. As the variable-length coding method, there are various types such as fixed numerical value compressing method (0 compression, or the like), Shannon-Fano coding method, Huffman coding method, Arithmetic coding method, Dictionary method, and the like. Any method may be employed.

The case where the Huffman coding method that is most common is used will be explained herein. According to this variable-length coding, the data whose frequency of occurrence is high are coded by using the small bit number and the data whose frequency of occurrence is low are coded by using the large bit number, so that a total amount of data can be reduced. A relationship between the data and the code is defined by a code table.

Here, suppose that the alignment of $\Delta\theta$ in the sampling points of the road block expressed in unit of 1 ° is given by "0_0-2_0_0+1_0_0-1_0+5_0_0_0+1_0".

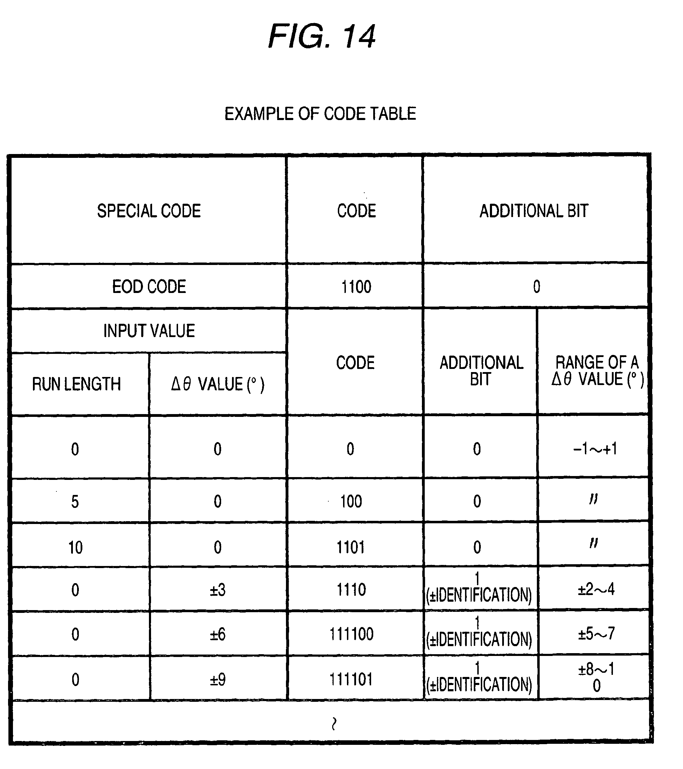

In order to code this data array, the case where a code table using a combination of the variable-length coding and the run length coding (continuous length coding) and shown in FIG.14 is used will be explained hereunder. In this code table, it is specified that a minimum angle resolution ($\delta$) is set to 3 °, a representative angle of $\Delta\theta$ in a range of -1 ° to +1 ° is set to 0 ° and represented by a code "0", a five sequence of 0 ° is represented by a code "100", and a ten sequence of 0 ° is represented by a code "1101". Further, it is specified that a representative angle of $\Delta\theta$ in a range of $\pm2$ ° to 4 ° is set to $\pm3$ ° and represented by adding an additional bit "0" to a code "1110" when a sign is (+) and adding an additional bit "1" to a code "1110" when a sign is (-), a representative angle of $\Delta\theta$ in a range of $\pm5$ ° to 0 ° is set to $\pm6$ ° and represented by adding an additional bit indicating a positive or negative sign to a code "111100", and a representative

angle of $\Delta\theta$ in a range of $\pm 8$ ° to 10 ° is set to $\pm 9$ ° and represented by adding an additional bit indicating a positive or negative sign to a code "111101".

Therefore, the above data array is coded as follows.

"0_0_11101_100_0_0_1111000_100"

→"0011101100001111000100"

The receiver side, when received this data, restores the data array of $\Delta\theta$ by using the same code table as that used in the coding process, and reproduces the position data of the sampling points by executing the opposite process to the transmitter side.

An amount of data of the coded data can be reduced by coding this data in this manner.

Further, as shown in FIG.15, in JP-A-2003-23357, it is proposed that a distance L2 of a constant distant resample is set short in the road block B in which a curvature of the road profile is large, and a distance L1 of a constant distant resample is set long in the linear road block A in which a curvature of the road profile is small. This is because, when the road whose curvature is large and whose curve is tight is resampled by a long distance, the sampling point cannot be arranged in the position that shows a characteristic feature of the road profile, so that a reproducibility of the road profile on the receiver side becomes worse, and also there is a strong possibility that a mismatching occurs.

For this reason, a value that a resample length Lj of each block j can take (quantization resample length) is set in advance to 40/80/160/320/640/1280/2560/5120, for example, then the length Lj is calculated based on a following formula by using a radius of curvature $\rho$ of the block j, and then a quantization resample length closest to this value is decided as the resample length Lj.

$$L_j = \rho j \cdot Kr \quad (Kr \text{ is a fixed parameter})$$

The method in JP-A-2003-23357 was tried by using three predictive formulae given as follows.

Predictive formula 1: $S_j = 0$ The deflection angle is used as it is (no prediction is made substantially).

Predictive formula 2: $S_j = \theta_{j-1}$ The deflection angle of the preceding node is used.

Predictive formula 3: $S_j = (\theta_{j-1} + \theta_{j-2})/2$ An average value of the deflection angles of the preceding node and two nodes ahead is used.

As a result, compression efficiencies derived by Predictive formula 1 were high on average, nevertheless there were some high compression efficiencies derived by Predictive formula 2 or Predictive formula 3 when the object road was checked individually.

Concretely, there were many cases where Predictive formula 2 or Predictive formula 3 is suited for the road such as the expressway, or the like having the profile that contains many long and gentle curves, and there were many cases where Predictive formula 1 is suited for the ordinary road.

Further, when Predictive formula 2 and Predictive formula 3 both being the same type predictive formula were compared with each other, there were many cases where Predictive formula 3 is excellent slightly in compression efficiency.

Disclosure of the Invention

Problems that the Invention is to Solve

In the compression processing method of road position data by the resample, a good compression rate is expected. However, the actual road data is not a simple model and, as described above, a resample length must be varied when a curvature of the road is changed. Further, the predictive formula must be varied when the adequate predictive formula is changed in the course of the road. In addition, a change of the road incidental code (e.g., distinction between the national road and the local road, or the like) itself and additional information such as a change point, an end-point position of the road, a starting-point position, a position of the target, and the like must be incorporated into the road data. Therefore, further reduction in an amount of data and improvement in efficiency of data transmission are demanded.

The present invention provides a linear object position data generating method and generating system capable of achieving improvement in efficiency of data transmission by compressing effectively resample data of a linear object like a road profile on a digital map in terms of a resample processing method.

Means for Solving the Problems

A linear object position data generating method of the present invention comprises the steps of (1) resampling a linear object at a predetermined resample length with a starting point of the linear object as a reference, (2) acquiring respective angular information of a plurality of resample points on the linear object, which are set by the resample, (3) setting markers representing additional information corresponding to the resample points when the additional information exists, (4) deciding incidental code values representing incidental codes of the angular information and the markers, (5) separating data of the linear object acquired in steps in (1) to (4) into a starting-point block containing starting-point data corresponding to the starting point, an angle/marker block containing the angular information and the markers, and an incidental-code block containing the incidental code values, (6) compressing the starting-point block, the angle/marker block, and the incidental-code block individually, and (7) linking the starting-point block, the angle/marker block, and the incidental-code block, which are compressed.

The angular information can be set to at least any one of a deflection angle or a predictive difference value at the resample point.

Further, the additional information contains additional information with offset and additional information without offset. Here, the additional information without offset contains at least one of a predictive formula changing point and a resample length changing point, and the additional information with offset contains at least one of a reference point, a road incidental code changing point, and an end point.

Further, a necessary bit length B to represent the offset of the additional information with offset can be calculated by

$$B=Roundup[log2(L/D)]$$

where L is the resample length, and D is a necessary reproducing precision.

Further, the angular information and the markers can be related with quantization angles 1 to 255 corresponding to an amount of data in 1 byte respectively. In this case, the angular information can be related with quantization angles 1 to 180, and the markers can be related with quantization angles preferentially from a maximum quantization angle 255 in descending order of quantization angle.

A Range-Coder can be used to compress the angle/marker block. Further, only valid bits of respective incidental code values can be extracted upon compressing the incidental-code block, and packing extracted valid bits into efficient bits can be executed.

In addition, after above steps in (1) to (6) are repeated plural times, and position data corresponding to a plurality of linear objects can be generated by linking a plurality of compressed starting-point blocks, a plurality of compressed angle/marker blocks, and a plurality of compressed incidental-code blocks and then linking all blocks, in step in (7) .

A program for causing a computer to execute above steps can be contained in the present invention.

Further, a linear object position data generating system of the present invention, includes a resample processing portion for resampling a linear object at a predetermined resample length with a starting point of the linear object as a reference; an angular information acquiring portion for acquiring angular information of a plurality of resample points on the linear object being set by the sample; a marker setting portion for setting markers to represent additional information corresponding to at least one resample point; an incidental code value deciding portion for deciding incidental code values to represent incidental codes of the angular information and the markers; a starting-point block generating portion for generating a starting-point block containing starting-point data corresponding to a starting point; a first angle/marker block generating portion for generating an angle/marker block containing the angular information and the markers; a second angle/marker block generating portion for generating an incidental-code block containing the incidental code values; a starting-point block compressing portion for compressing the starting-point block; an angle/marker block compressing portion for compressing the angle/marker block; an incidental-code block compressing portion for compressing the incidental-code block; a block linking portion for linking the compressed starting-point block, the compressed angle/marker block, and the compressed incidental-code block; and a data transmitting portion for transmitting position data of the linear object obtained by the block linking portion.

Advantages of the Invention

According to the present invention, further reduction in an amount of data and improvement in efficiency of data transmission can be attained by compressing effectively resample data of the linear object such as the road profile in the digital map, or the like.

Brief Description of the Drawings

FIG.1 is a view of a road resample of a predetermined object road.

FIG.2 is a table showing allocations of an angle and a marker to respective symbol values.

FIG.3 is a data structure in a present embodiment.

FIG.4 is an example of a data structure, wherein FIG.4A shows a state before data are divided into three blocks, and FIG. 4B shows a state after data are divided into three blocks.

FIG.5 is a histogram of a frequency of occurrence of angle/marker symbols.

FIG.6 is a conceptual view of incidental code extraction and packing into efficient bits.

FIG.7 is a completed data structure.

FIG.8 is a conceptual view showing a state in which respective blocks of a plurality of road profile data are integrated into one block.

FIG.9 is a block diagram of a road traffic information providing system to which the present invention is applied.

FIG.10 is a flow of data generating process in an information transmitting equipment.

FIG.11 is a flow of incidental-code block compressing process.

FIG.12 is a flow of offset setting process.

FIG.13 is a view explaining a method of converting position data into data that has a bias statically.

FIG.14 is a view showing a code table used in a variable-length coding.

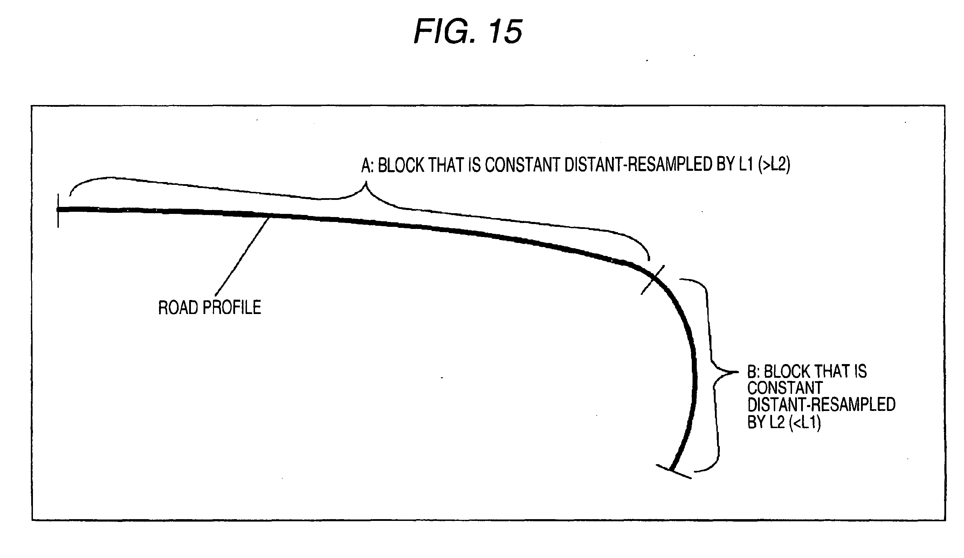

FIG. 15 is a view explaining a change of a resample length based on a curvature of a road profile.

Description of Reference Numerals

| | |
|---|---|
| 100 | information transmitting equipment |
| 110 | event information inputting portion |
| 120 | data extracting portion |
| 130 | digital map database A |
| 140 | resample processing portion |
| 150 | offset calculating portion |
| 160 | variable-length coding processing portion |
| 161 | data disassembling portion |
| 163 | starting-point block compressing portion |
| 165 | angle/marker block compressing portion |
| 167 | incidental code value block compressing portion |
| 169 | block linking portion |
| 170 | data transmitting portion |
| 200 | information utilizing equipment |
| 210 | data receiving portion |
| 220 | coded data decoding portion |
| 221 | starting-point block decoding portion |
| 223 | angle/marker block decoding portion |
| 225 | incidental code value block decoding portion |
| 227 | data array decoding portion |
| 230 | data restoring portion |
| 240 | position identifying portion |
| 250 | digital map database B |
| 260 | information utilizing portion |
| 300 | traffic information providing system |

Best Mode for Carrying Out the Invention

Embodiments of the present invention will be explained with reference to the drawings hereinafter.

The present invention proposes a linear object position data generating method and generating system. A representative of the linear object is a road profile on a digital map, and the present invention is used usefully in the road traffic information communication system containing road profile information. In this application mode, the traffic information provider side, when delivers a road position in which an event such as a traffic jam, an accident, or the like occurs, transmits "road position data" and "event position data" of a predetermined object road containing the event position to the information receiver side, while the information receiver side specifies a road block on own digital map by using the road position data and also specifies an event occurring position in this road block by using the event position data.

Such "road position data" are constructed by coordinate sequences consisting of nodes and interpolation points (vertexes of polygonal lines that approximate curves of the road. In this specification, unless particularly mentioned, the interpolation points as well as the nodes are called the "nodes".) aligned on that road. Such "event position data" represents the event position by relative positions in the road profile given by the road position data.

In order to generate coded data by coding the rode profile on the digital map as an example of the linear object, the road position data generating method generates the coded data roughly in the order of

(a) resample of the road profile by a resample length in response to a radius of curvature of the road,
(b) conversion of position data at the sampling points (nodes) into the deflection angle θ,
(c) conversion of the position data represented by the deflection angle θ into the values that have a bias statistically, and
(d) compressing process (variable-length coding) of the converted value.

The resample of the road profile in (a) is carried out by the method set forth in JP-A-2003-23357, and a plurality of nodes are set by resampling the obj ect road as the linear object. Further, the conversion into the deflection angle θ in (b) is carried out such that position data of respective nodes are represented by angular components based on the method set forth in JP-A-2003-23357 and then the angular components are converted into the deflection angle θ. The conversion of the position data into the values that have a bias statistically in (c) is the process that calculates $S_j$ by using adaptively the (predictive formula) of the predictive value $S_j$, which is used to predict values of the position data, and then converts the deflection angles θ of the deflection angle sequence into difference values (predictive difference values). The compressing process (variable-length coding) in (d) is the process that applies the compressing process, particularly the variable-length coding, to the predictive difference values (predictive errors) of profile data that are converted into the predictive difference value sequence.

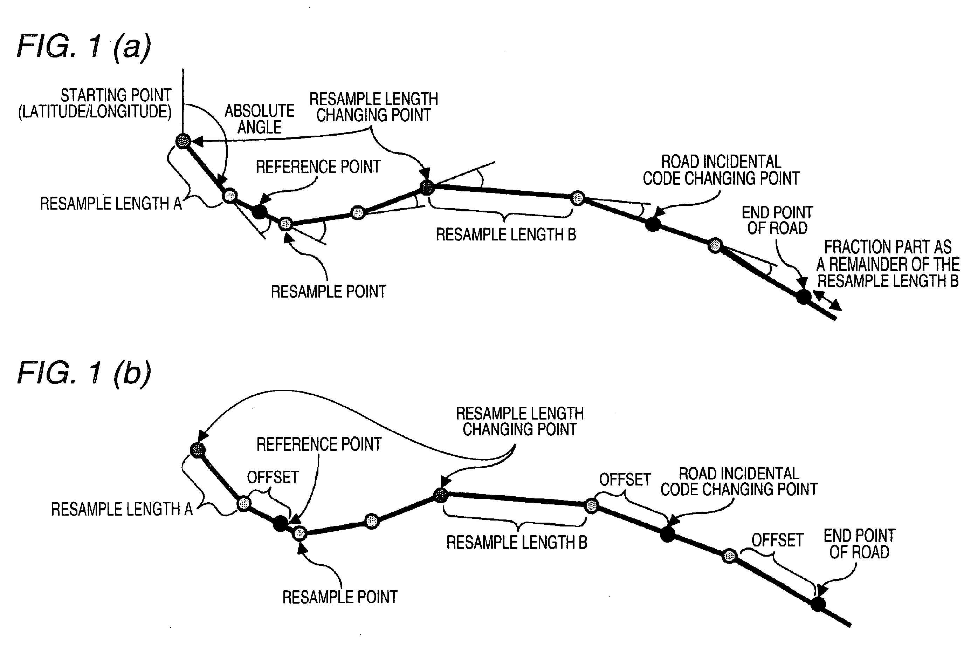

FIG.1 shows a conceptual view (road resample view) showing a situation that a predetermined object road is resampled in the above step in (a) and then resample points are linked by a straight line having a predetermined resample interval length. The term "resample" means that a new coordinate point should be set such that a distance from an adjacent coordinate point becomes constant.

As shown in FIG.1(a), data regarding a starting point (latitude/longitude coordinate) indicating the starting point of the road, an absolute angle indicating the direction along which the road extends from the starting point, a resample length up to the adjacent node, and a deflection angle derived in the above steps in (b) and (c) and a predictive difference value of the deflection angle (these are called collectively "angular information" of the resample point) are incorporated into the road position data. It is common that these data are contained in the road position data.

Further, since a change of the resample length is needed in answer to a change of a curvature of the road, a resample length changing point indicating a spot at which the resample length should be changed is contained in the road position data. In an example in FIG.1(a), two types A, B are present as the resample length. Further, a road incidental code changing point (e.g., a changing point from the national road to the local road) indicating that the incidental code of the road is changed, an end point indicating an end point of the road, and an extra length indicating a difference of the distance between a position that goes ahead from the preceding node by one resample length and the end point of this road are contained in the road position data.

In this manner, following additional information in addition to the resample points and the angular information of respective resample points are contained in the actual road position data.

(1) Additional information to enhance a compression efficiency

(1a) Resample length changing point (a spot at which the resample length is changed in the middle when a curvature is changed in the middle of the road)
(1b) Predictive formula changing point (a spot at which the predictive formula is changed in the middle when an adequate predictive formula is changed in the middle of the road)

(2) Additional information to reproduce more exactly a position code

(2a) Road incidental code changing point (change from the national road to the local road, or the like)
(2b) Road end-point position
(2c) Target (position of a spot to be referred (reference point) such as POI (Point of Interest),or the like)

In view of the above, in the actual resample, a "marker (guide)" for representing information corresponding to the resample point except the angular information (additional information) is inserted just after the concerned resample point. At least one marker representing the additional information is incorporated to respond to at least one resample point.

Several types of objects (types of additional information) represented by the marker are defined, and one or plural incidental codes defined previously are allocated to each marker. A plurality of markers can be affixed to one corresponding resample point.

Further, there are the marker that may be caused to coincide with the resample point in response to the incidental code and the marker that may not be caused to coincide with the resample point. For example, the position on the road in which the information like (1a),(1b) in the information used to enhance the compression efficiency in above (1) are arranged coincides with the position of the resample point. The marker with such incidental code is called a "marker without an offset", and the additional information represented by this marker is called an "additional information without an offset".

In contrast, the position on the road in which the information like (2a) to (2c) in the information used to reproduce more exactly the position code in above (2) are arranged does not always coincide with the position of the resample point, or more truly it is common that the position on the road does not coincide with the position of the resample point. The marker with such incidental code is called a "marker with an offset", and the additional information represented by this marker is called an "additional information with an offset".

In the additional information without the offset, the incidental code can be represented by a fixed bit length. This is because the concerned incidental code is never varied fro the position of the resample point.

In contrast, in the additional information without the offset, data indicating a distance from the sample point (offset) is needed. A bit length B necessary for this data is decided by

$$B = Roundup[log2 \ (L/D)]$$

where L (m): resample length at a spot where the marker is generated, and
D (m) : necessary reproducing precision.

For example, when the resample length L=240 m and the necessary reproducing precision D=3 m, the bit length B is given as follows.

$$B = Roundup[log2 \ (240/3)] = 7 \ (bit)$$

Here, D is decided to correspond to the marker.

In view of the above, angular information of each sampling point (deflection angle and predictive difference value of the deflection angle) and a method of incorporating the marker into the road position data (symbolizing method) will be considered.

First, when an angle is 0, there is no need to provide an additional bit representing the incidental code. Further, when an angle is out of 0, one additional bit representing a positive or negative (clockwise or anticlockwise) as the incidental code must be provided to each angle.

Further, the marker has a value of the fixed bit length in answer to each incidental code. The offset is variable in the marker with the offset, but a bit length can be specified by the resample length L and the necessary reproducing precision D at a time of the marker occurrence.

From the above, if a symbol value of the marker is set not to overlap with a symbol value of the angle, they can be symbolized integrally as follows.

$$[Symbol \ value \ of \ the \ angle \ or \ the \ marker] + [Incidental$$
$$code \ value \ representing \ the \ incidental \ code \ of \ this$$
$$symbol \ value]$$

A bit length of the incidental code can be specified if the symbol and the resample length at that time point are decided. Further, if the angle is covered over 0 to 180 degree, no problem particularly arises in practical use. Further, it is guessed that the types of markers do not exceed 50.

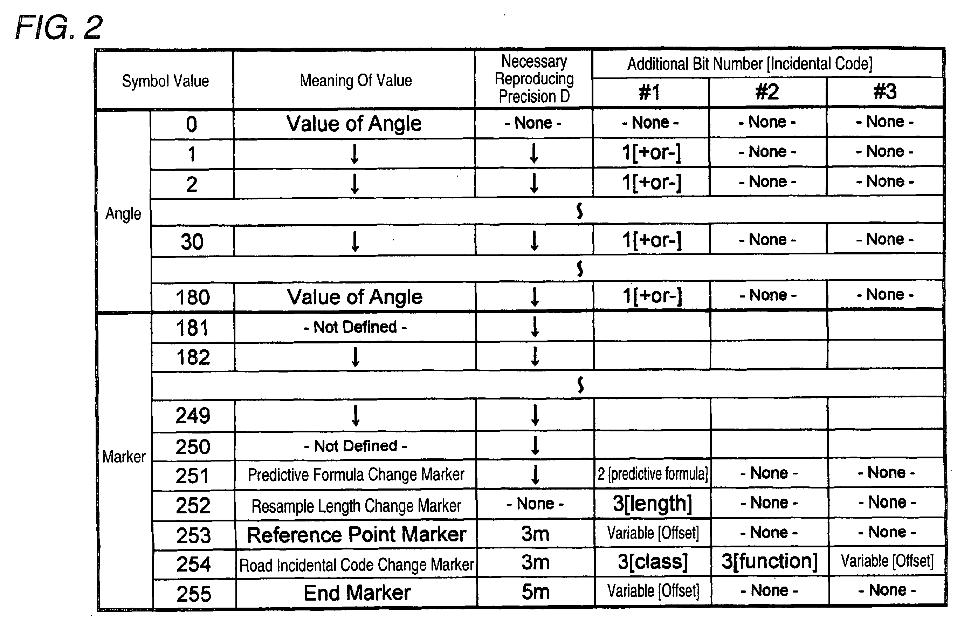

. From the above, the case where all symbol values of the angles or the markers are represented by 1 byte bit length may be considered as an example. Concretely, it may be considered that the symbol values 0 to 180 (quantization angle 1 to 180) are allocated to the angular information and the symbol values 181 to 255 (quantization angle 181 to 255) are allocated to the marker. A table indicating allocations of the angle and the marker to respective symbol values is shown in FIG.2.

In particular, in the table in FIG.2, the marker is caused to correspond preferentially to the symbol value from the maximum quantization angle 255 in descending order of quantization angle.

Definitions of the symbol values of respective markers in Table in FIG.2 are set as follows, but these settings are given as a mere example. Various modes can be employed.

(1) Symbol value 251: Predictive Formula Change Marker

00: Predictive Formula=0 The deflection angle $\theta_j$ is used as it is.
01: Predictive Formula=$\theta_{j-1}$ The upstream side deflection angle $\theta_{j-1}$ is used.
10: Predictive Formula=$(\theta_{j-1}+\theta_{j-2})$ /2 An average value of two upstream side deflection angles is used.
11: not defined

(2) Symbol value 252: Resample Length Change Marker

000:25 m, 001:40 m, 010:62 m,..., 110:389 m, 111:615 m

(3) Symbol value 254:

(3a) Road type ([class]) of Road Incidental code Change Marker
000: expressway, 001: national road, 010: Tokyo municipal, Hokkaido prefectural, or prefectural road, 011: city, town, or village road (its width is 5.5m or more), 100: city, town, or village road (its width is below 5.5 m),..., 101: other than a public road (taxiway in a facility, or the like), 110: not defined, 111: not defined
(3b) Function type ([function]) of Road Incidental code Change Marker
000: main road, 001: interchange (IC), 010: connection road between the main roads, 011: bypass, 100: not defined, ..., 101: not defined, 110: not defined, 111: not defined

(4) Offset in the symbol values 253 to 255

Bit number calculated by B=Roundup[log2 (L/D)] while using the resample length L [m] at the spot where the marker is generated and the necessary reproducing precision D [m].

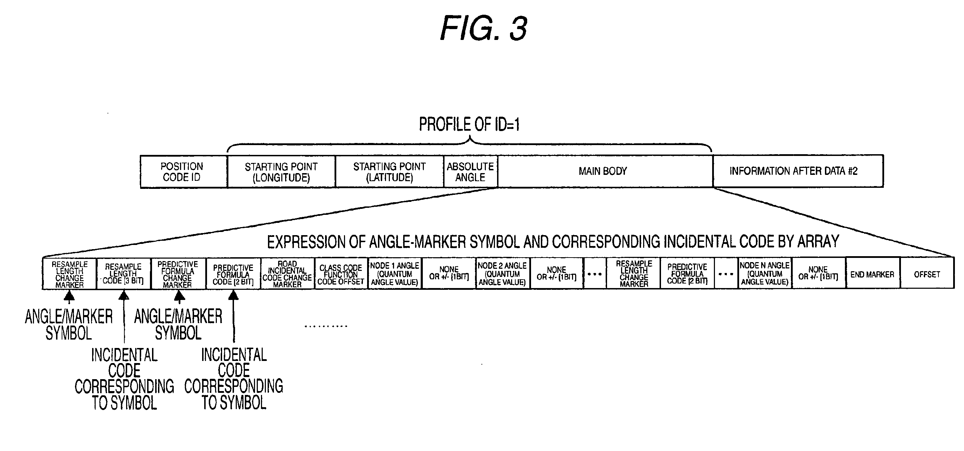

A format of the road position data formed based on the above explanation is shown in FIG.3. One road position data corresponding to Position Code ID is described subsequently to this Position Code ID, and then data of ID=2, 3,..., follow. Here, only the format corresponding to ID=1 is shown.

Absolute angle data and Main body data are set subsequently to Starting point data (longitude/latitude) in the road position data. Resample length change marker, Predictive formula change marker, and Road incidental code change marker described in the head portion of the main body data have a role to set an initial value of the resample road profile. Subsequently, the markers are inserted in the same way as the angles of respective nodes, as the case may be (change of the road incidental codes, change of the resample length, occurrence of the reference point, or the like).

In this stage of the data, lengths of respective portions are given as follows. In this stage, the data is constructed by two byte boundary to make the process easy.

Position Code ID: 2 byte
Starting Point (latitude/longitude): 4 byte
Absolute Angle: 2 byte (only lower 9 bits are valid)
Symbol values of the angle and the marker: 2 byte (only lower 8 bits are valid)
Additional bit: 2 byte (valid bit number is different in response to the symbol and the resample length)

Next, the above data compressing method (equivalent to the compressing process of the above converted value in (d)) will be explained hereunder. First, the case where only one road position data is given will be explained. Then, the case where plural pieces of position data are given will be explained.

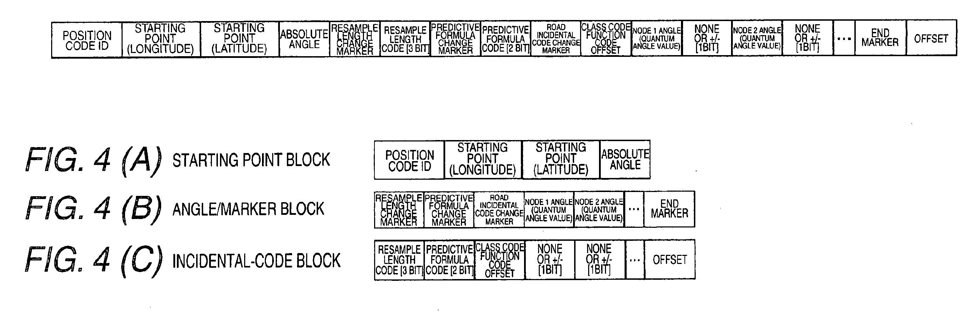

Three parts (blocks) shown in FIG.4(b) are generated by dividing one road position data shown in FIG.4 (a). Three parts correspond to (A) Starting Point Block, (B) Angle/Marker Block, and (C) Incidental-code block. Then, the compressing process is applied to respective blocks individually.

(A) Compressing Process of Starting Point Block

The starting point block contains the starting point data constructed by position code ID, longitude data, latitude data, and absolute angle data. Out of them, the position code ID is utilized as it is (not compressed).

Remaining data are reduced in data size by changing the least efficient bit (LSB) respectively. An example is given in the following.

Latitude data: changed from 4 byte to 3 byte
Longitude data: changed from 4 byte to 3 byte
Absolute angle data: changed from 9 bit to 1 byte (8 bit)

Here, 1 LSB of each data corresponds to a following angle.

Latitude data: 1 LSB=$360/2^{24}$ (degree)
Longitude data: 1 LSB=$360/2^{24}$ (degree)
Absolute angle data: 1 LSB=$360/2^{8}$ (degree)

In Tokyo of Japan, an error of 1 LSB of the Latitude and the Longitude corresponds to 1.1 to 1.4 m, but no significant trouble is caused in practical use.

(B) Compressing Process of Angle/Marker Block

The angle/marker block contains angular information and the markers. The variable length coding (VLC) process is applied to compress the angle/marker block. As the coding method used in this process, Arithmetic Coding whose coding efficiency is higher and also Range-Coder as a derivation of Arithmetic Coding can be employed in addition to Huffman Coding. This Range-Coder is the adaptive coding method that can follow up a change of a frequency of occurrence (adaptive range-coder)

Normally, Range-Coder is inferior in compressing efficiency to Arithmetic Coding, but it has the characteristic such that a processing load is very light. In particular, when it is considered that a processing load on the decoder side should be lessened, this Range-Coder is preferable.

Further, normally Range-Coder executes the processing in unit of 1 byte. In this case, a program whose processing load is particularly light can be installed into the equipment. As described above, in the present embodiment, all angles and markers are represented by the symbol values 0 to 255, i.e., an amount of data in 1 byte, and therefore such data representation is ready to fit to Range-Coder.

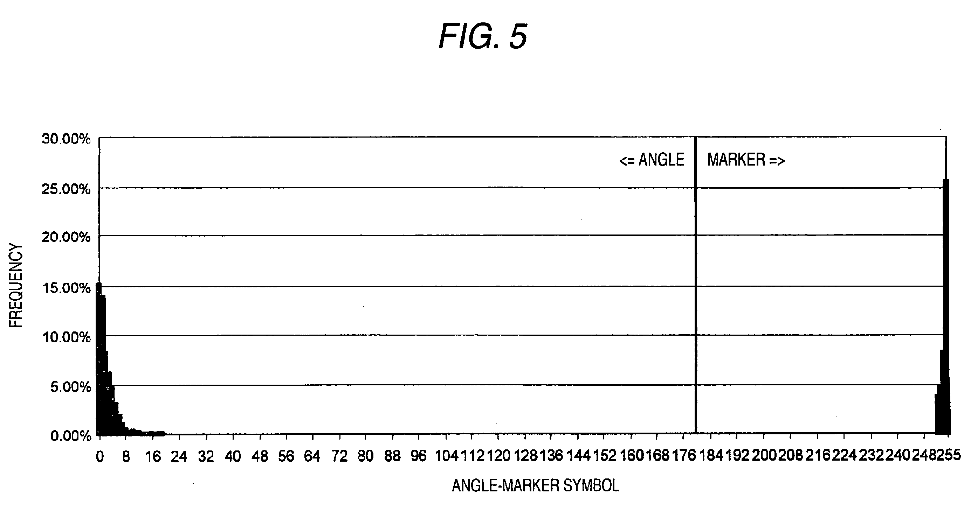

A histogram of a frequency of occurrence of angle/marker symbols is shown in FIG.5. Normally, all initial values of a frequency-of-occurrence table are set to 1 (same probability) in Range-Coder. However, because a large number of coding processes are needed until the frequency-of-occurrence table goes to an adaptable state, a coding efficiency is very low until this system adapts to the operation.

Therefore, in the present embodiment, the initial values in the frequency-of-occurrence table have a bias in advance to meet the representative occurring probability. This bias is given by the parameter that is common between the encoder and the decoder. It may be considered that, when a data size is large, such parameter is incorporated into the header portion.

An occurring probability of respective symbols of the angle/marker is changed according to the compression parameter and the area characteristic. But a slight difference gets adjust gradually with the progress of process because the adaptive Range-Coder is employed.

As a result, when the Range-Coder is employed, normally the compression efficiency is enhanced as a data size is increased. Here, the output of Range-Coder is in unit of byte, and the byte boundary is inserted automatically in the course of compression.

(C) Compressing Process of Incidental-code block

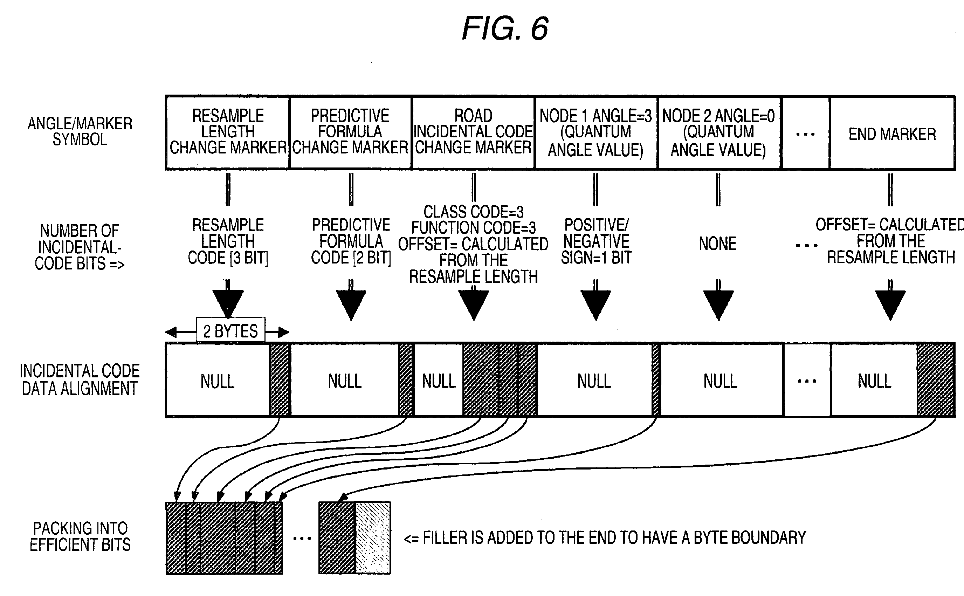

Because normally only several bits are used to express the incidental code value, it is often that the efficient bit number is below 1 byte. Therefore, the so-called packing into efficient bits is applied by extracting only the efficient bit number from the original data. This step is shown in FIG.6.

The efficient bit number of respective markers and the angular information corresponds to the additional bit number in FIG.2. Further, the efficient bit number of the offset in the marker with offset is decided by B=Roundup[log2 (L/D)].

Packing into efficient bit is executed by extracting only the valid portion from the 2-byte data. Here, the filler is added the end portion to ensure the byte boundary.

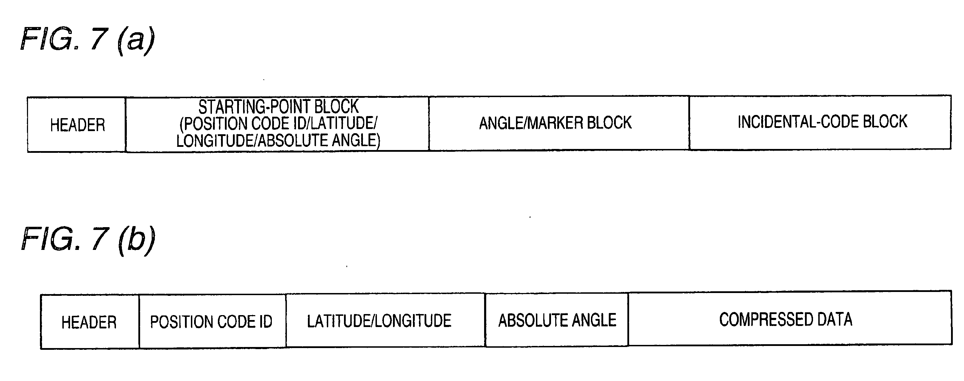

Finally, as shown in FIG. 7 (a), one road position data is completed by linking three compressed blocks explained up to now. It can be understood from other viewpoints that this completed format has a data structure shown in FIG.7(b).

Next, an example of the process applied in transmitting plural pieces of road position data is shown.

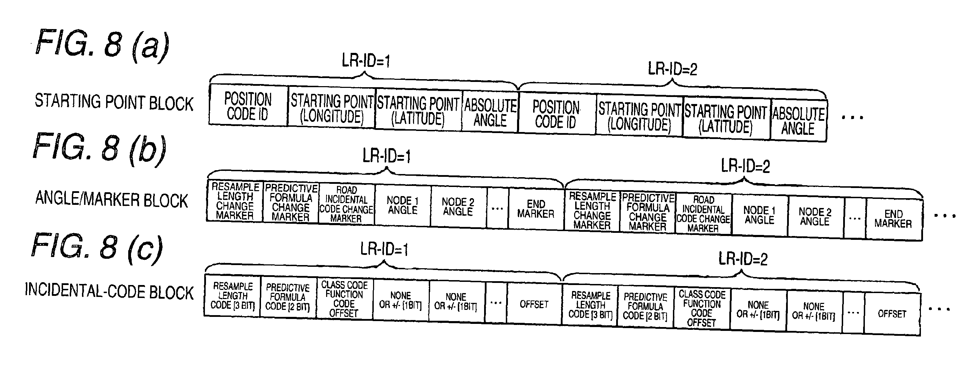

As explained up to now, the byte boundary is attached to the angle/marker block and the incidental-code block respectively. It can be understood that, when looks at this operation differently, this operation causes waste of 0.5 byte on average in each block. Therefore, it may be considered that, when plural pieces of road position data are processed, not each road position data is converted into the above format but data corresponding to all road position data are gathered into each block and are incorporated (see FIG.8). Further, the number of road position data is incorporated into the header portion. Here, the road position data corresponding to a plurality of road profiles are generated by linking a plurality of compressed starting-point blocks, the compressed angle/marker blocks, and the compressed incidental-code blocks prior to the linking step in FIG.7, and then linking all blocks.

It can be attained by doing this that data of 1 byte can be reduced on average per one road position data. In the system like VICS in which the number of position codes is in excess of several thousand codes, an accumulation of these efforts, even though small effort, is more significant than expected.

According to this data format, even when only a certain part of road position data is selected and decoded, all data must be decoded once. It is true that this data format is hard to handle. Therefore, there are some cases where the data should be completed (transmitted) in unit of road position data depending on the application.

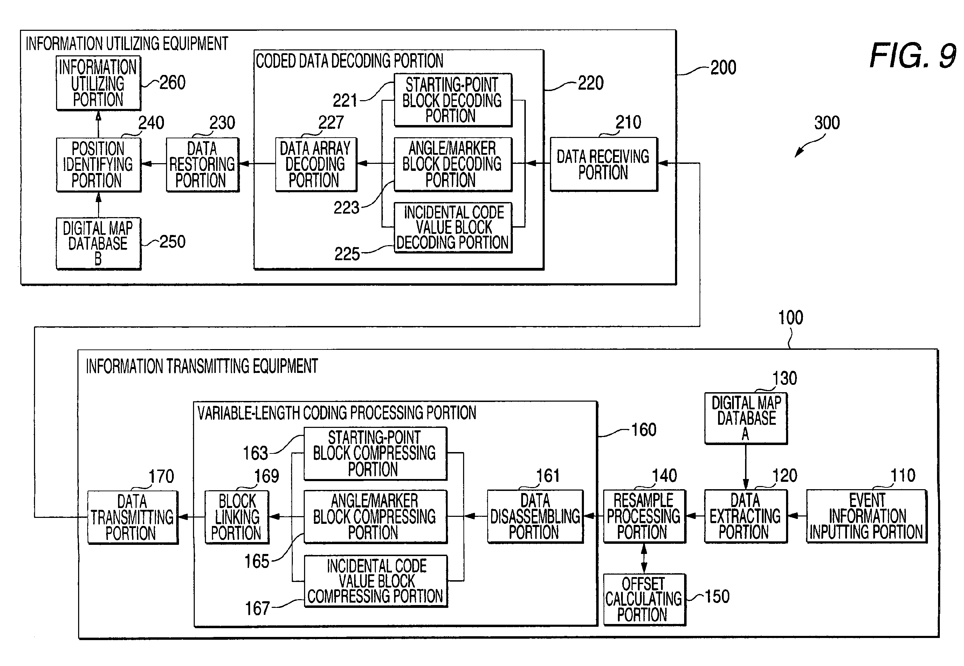

FIG.9 shows a conceptual view of a road traffic information providing system 300 to which the present invention is applied. The traffic information providing system 300 is constructed by an information transmitting equipment (data generating equipment) 100 and an information utilizing equipment 200 that puts the received information to practical use.

The information transmitting equipment 100 includes an event information inputting portion 110 into which traffic jam information, traffic accident information, etc. are input, a data extracting portion 120 for extracting the road position data of the object road block for the traffic information from a digital map database A 130, a resample processing portion 140 for generating a position data array of the sampling points by resampling the road position data extracted by the data extracting portion 120, an offset calculating portion 150 for calculating the offset from the object data processed by the resample processing portion 140, a variable-length coding processing portion 160 for compress-coding the data generated by the resample processing portion 140, and a data transmitting portion 170 for transmitting the compress-coded road position data.

In contrast, the information utilizing equipment 200 includes a data receiving portion 210 for receiving the provided road position data, a coded data decoding portion 220 for decoding the compress-coded data, a data restoring portion 230 for restoring the resample data, a position identifying portion 240 for identifying the road block represented by the sampling points on the digital map by identifying the position while using the data in a digital map database B 250, and an information utilizing portion 260 for putting the obtained traffic information to practical use.

The variable-length coding processing portion 160 of the information transmitting equipment 100 has a data disassembling portion 161, a starting-point block compressing portion 163, an angle/marker block compressing portion 165, an incidental code value block compressing portion 167, and a block linking portion 169.

In the variable-length coding processing portion 160, the data disassembling portion 161 disassembles the road position data with offset of particular additional information, which are resampled by the resample processing portion 140 and calculated by the offset calculating portion 150, into three blocks, and these blocks are compressed by the starting-point block compressing portion 163, the angle/marker block (symbol block) compressing portion 165, and the incidental code value block compressing portion 167 respectively. Then, the compressed data of respective blocks are linked by the block linking portion 169.

Although their detailed configurations are not mentioned, an angle information acquiring portion for acquiring the angular information of a plurality of resample points being set by the resample, a marker setting portion for setting the marker representing the additional information corresponding to at least one resample point, and an incidental code value deciding portion for deciding the incidental code values representing the incidental codes of the angular information and the markers can be provided in the data extracting portion 120 and the resample processing portion 140. But their arrangement positions are not particularly restricted. Further, a starting-point block generating portion for generating the starting-point block that contains starting-point data corresponding to the starting point, a first angle/marker block generating portion for generating the angle/marker block that contains the angular information and the markers, and a second angle/marker block generating portion for generating the incidental-code block that contains the incidental code value can be provided in the data disassembling portion 161. But their arrangement positions are not particularly restricted.

The coded data decoding portion 220 in the information utilizing equipment 200 has a starting-point block decoding portion 221, an angle/marker block (symbol block) decoding portion 223, an incidental code value block decoding portion 225, and a data array decoding portion 227.

In the coded data decoding portion 220, the road position data received and compressed by the data receiving portion 210 are decoded by the starting-point block decoding portion 221, the angle/marker block (symbol block) decoding portion 223, and the incidental code value block decoding portion 225 every block. Then, the decoded data in respective blocks are linked by the data array decoding portion 227.

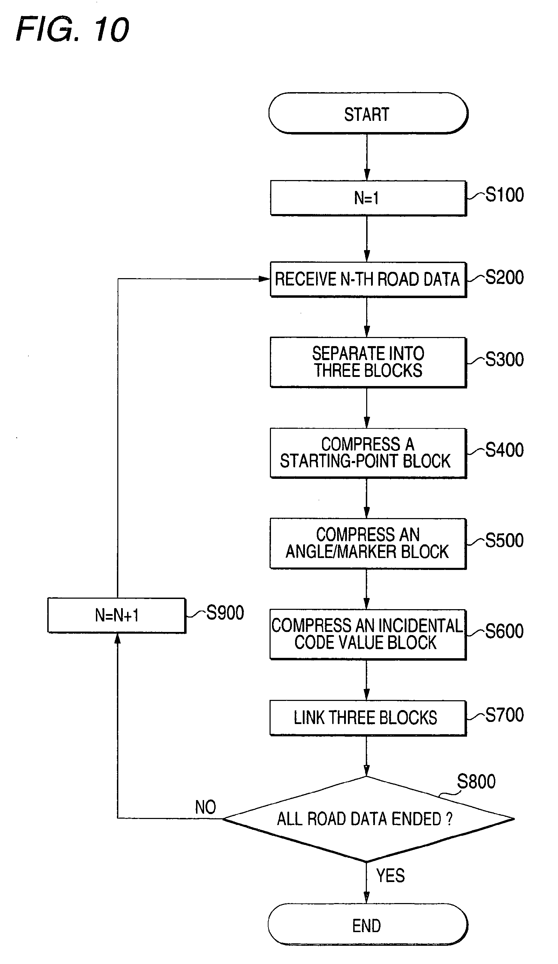

FIG.10 shows an example of a flow of data generating process in the information transmitting equipment 100 (transmitter side). After the reception of all road position data is ended in the event information inputting portion, first the process is started from the first road position data (steps S100, S200). Then, the received road position data is separated into three blocks (A) to (C) mentioned above (step S300) Then, the compression of (A) the starting-point block, (B) the angle/marker block, and (C) the incidental code value block is executed sequentially by the above system (steps S400, S500, S600) . After the compression of three blocks is finished, these blocks are linked (step S700). Then, it is decided whether or not all received road position data are processed, and the process is ended if the process of all data is ended (step S800; Yes). Here, the process equivalent to FIG.8 can be executed after this. If the process of all data is not ended yet (step S800; No), the processing object is shifted to the next data (step S900). Then, the processes subsequent to step S200 are continued.

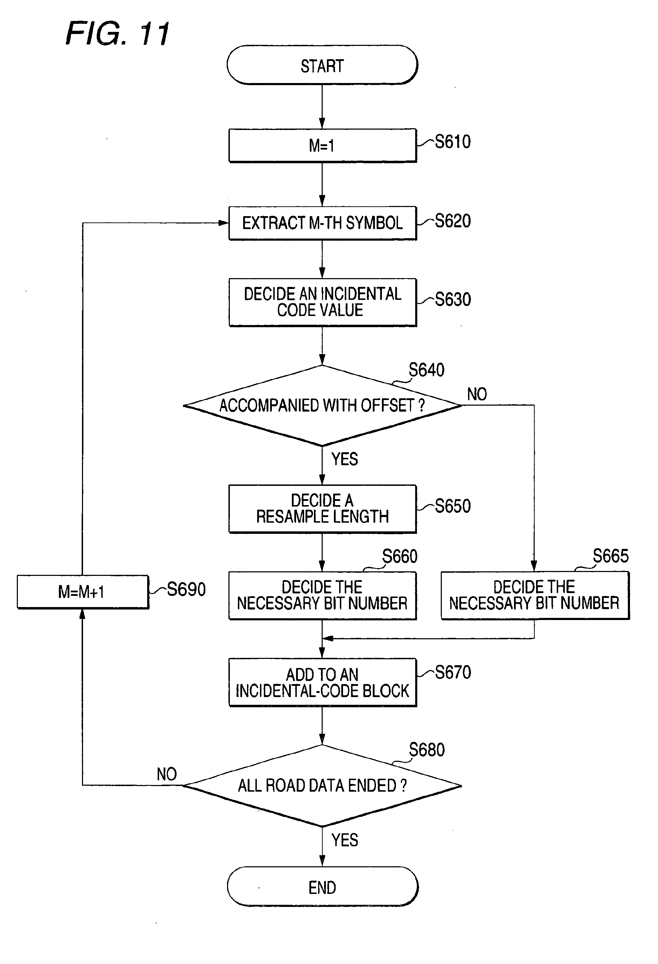

FIG.11 shows an example of a flow of the incidental-code block compressing process (step S600 in FIG.10). In case M symbols (angular information or markers) exist in one road position data, first the first symbol is extracted (steps S610, S620). Then, the incidental code value of the extracted symbols is decided (step S630). Then, it is decided whether or not the incidental code represented by the incidental code value is accompanied with the offset (step S640) . If the incidental code is accompanied with the offset (step S640; Yes), the resample length at a time that symbol appears is decided (step S650). Then, the necessary bit number (valid bit number) to represent the incidental code of that symbol containing the bit number ("Variable" in Table in FIG.2) necessary for the offset is decided (step 5660). Then, the bit number is add to the incidental-code block (step S670). In contrast, if the incidental code is not accompanied with the offset (step S640; No), only the decision as to the necessary bit number (valid bit number) to represent the incidental code of that symbol is made (step S665). Then, it is decided whether or not all symbols are processed (step S680). If the incidental codes of all symbols are incorporated into the incidental-code block (step S680; Yes), the process is ended. If the incidental codes of all symbols are not incorporated into the incidental-code block yet (step S680; No), the processing object is shifted to the next symbol (step S690) Then, the processes subsequent to step S620 are continued.

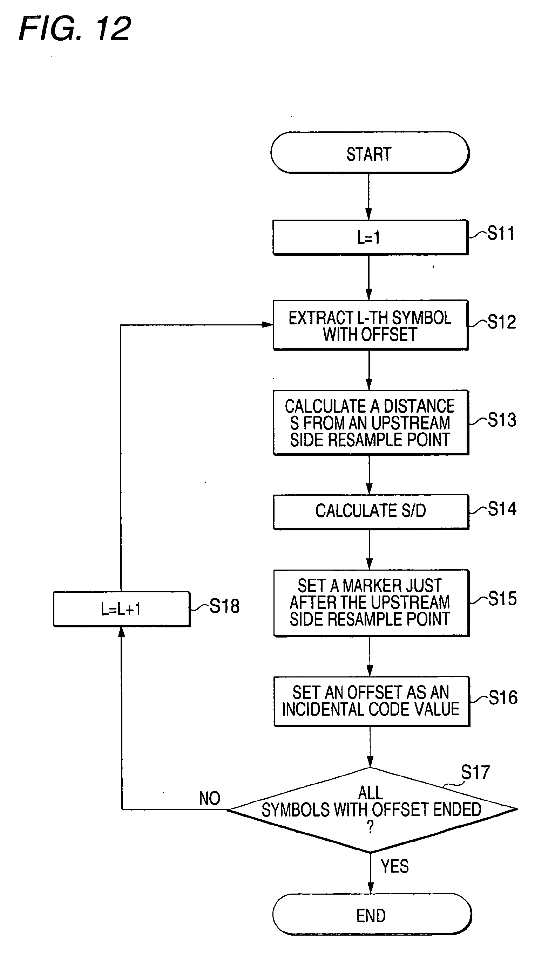

FIG.12 shows an example of a flow of offset setting process. Assume that L symbols out of M symbols in one road position data are accompanied with the offset setting. First, the first symbol accompanied with the offset (symbol with offset) is extracted (steps S11, S12) . Then, a distance S of the extracted symbol from the upstream side resample point is calculated (step S13). Then, the offset value=S/D (D is the necessary reproducing precision) is calculated (step S14). Then, the marker of that symbol is set just after the upstream side resample point (step S15), and then the offset is set as the incidental code value (step S16) . Then, it is decided whether or not all symbols with offset are processed (step S17). If all symbols with offset are processed (step S17; Yes), the process is ended. In contrast, if all symbols with offset are not processed yet (step S17; No), the processing object is shifted to the next symbol with offset (step S18). Then, the processes subsequent to step S12 are continued.

Further, the information utilizing equipment 200 (receiver side) is constructed by the car navigation system installed into each vehicle, and acts as the so-called decoder that restores the received traffic information. The decoding process in the information utilizing equipment 200 will be explained in brief hereunder.

(1) The number of road position data is acquired from the header of the received data.

(2) The starting-point block is decoded based on the number of road position data. The starting point is constructed by a 9-byte fixed length per road position data in the foregoing explanation. The starting point is read as many as the number of road position data, and decoded into a predetermined format.

(3) The angle/marker block and the incidental-code block as the remaining data are decoded collectively from the head by using Range-Coder. It is decided that, when the end marker appears in the middle of decoding, this portion corresponds to a break of the profile (end portion of one road position data) . The decoding process performed by Range-Coder is ended at a point of time the end marker appears as many as the number of road position data. The road data of angle/marker block as a unit of the profile are decoded by the process applied until now.

(4) The incidental code can specify uniquely the number of bits to be picked up if the angle/marker symbol (together with the resample length at that point of time if the symbol contains the offset) is specified. The angle/marker symbol is picked up sequentially from the incidental-code block as many as the number of corresponding bits while reading the angle/marker symbol sequentially.

(5) The road position data are decoded by rearranging respective decoded data.

(6) The Latitude/Longitude are decoded from the road position data.

The information transmitting equipment 100 as the road position data generating equipment is an example of the embodiment on the information transmitter side. The equipment in any mode may be employed if the equipment or the terminal can transmit the information. In addition, the generated data can be recorded on the medium and provided to other equipments. Further, the information utilizing equipment 200 as the road position data restoring equipment is an example of the embodiment on the information receiver side. Any equipment may be employed if the equipment can put the information of the personal computer, the mobile terminal, PDA, or the like to practical use. Of course, the information collecting center that can restore the coded data or the equipment on the center side can achieve the similar advantages. Further, it is needless to say that the similar advantages can be achieved by executing the restoring process by using the medium on which the coded data are recorded.

Further, the algorithm (program) prepared along the road position data generating method of the present invention can be recorded on the recording medium that records map data in which various map information are given to a map data main body. Accordingly, the map data main body itself can be compress-coded.

In the above embodiment, an example in which the linear object is the rode profile to refer to the position is explained, but the linear object is not restricted to the rode profile. The "linear object" may contain all the elongated profiles including various modes such as a straight line, a curved line, and the like, and may contain all the geographic information represented by the linear shapes on the map. In addition, the "linear object" may contain all the shapes such as a fingerprint, and the like that are not relevant to the map but can be represented by the linear profile.

The program applied to carry out the road position data generating method of the present invention can be installed into the system in various formats. Further, the program may be recorded on the information recording device such as the hard disk, or the information recording medium such as CD-ROM, DVD-ROM, memory card, or the like.

With the above, various embodiments of the present invention are explained, but the present invention is not limited to the matters shown in the embodiments. Variations and adaptations made by those skilled in the art based on the descriptions of the specification and the well-known technologies are acceptable to the present invention, and are contained in a scope within which protection is sought.

This application is based upon Japanese Patent Application (Patent Application No.2004-346733) filed on November 30, 2004; the contents of which are incorporated herein by reference.

Industrial Applicability

According to the road position data generating method and generating system of the present invention, resample data of the linear object are compressed effectively. Therefore, reduction in amount of data and improvement in efficiency of data transmission can be attained.

**Claims**

1. A linear object position data generating method comprising :

    (1) resampling a linear object at a predetermined resample length with a starting point of the linear object as a reference;
    (2) acquiring respective angular information of a plurality of resample points on the linear object, which are set by the resampling;
    (3) setting markers representing additional information corresponding to the resample points when the additional information exists;
    (4) deciding incidental code values representing incidental codes of the angular information and the markers;
    (5) separating data of the linear object acquired in steps in (1) to (4) into a starting-point block containing starting-point data corresponding to the starting point, an angle/marker block containing the angular information and the markers and an incidental-code block containing the incidental code values;
    (6) compressing the starting-point block, the angle/marker block, and the incidental-code block, individually; and
    (7) linking the starting-point block, the angle/marker block, and the incidental-code block, which are compressed.

2. The linear object position data generating method according to claim 1, wherein the angular information is at least any one of a deflection angle at the resample point and a predictive difference value of the deflection angle at the resample point.

3. The linear object position data generating method according to claim 1 or 2, wherein the additional information contains additional information with offset and additional information without offset.

4. The linear object position data generating method according to claim 3, wherein the additional information without offset includes at least one of a predictive formula changing point and a resample length changing point.

5. The linear object position data generating method according to claim 3, wherein the additional information with offset includes at least one of a reference point, a road incidental code changing point and an end point.

6. The linear object position data generating method according to claim 1, wherein a necessary bit length B to represent the offset of the additional information with offset is calculated by

$$B=Roundup[log2(L/D)]$$

where L is the resample length, and D is a necessary reproducing precision.

7. The linear object position data generating method according to any one of claims 1 to 6 further comprising relating the angular information and the markers with quantization angles 1 to 255 that corresponds to an amount of data in 1 byte, respectively.

8. The linear object position data generating method according to claim 7, further comprising:

relating the angular information with quantization angles 1 to 180; and
relating the markers with quantization angles preferentially from a maximum quantization angle 255 in descending order of quantization angle.

9. The linear object position data generating method according to any one of claims 1 to 8, wherein a Range-Coder is used to compress the angle/marker block.

10. The linear object position data generating method according to any one of claims 1 to 9, further comprising extracting only valid bits of respective incidental code values upon compressing the incidental-code block, and packs the extracted valid bits into efficient bits.

11. The linear object position data generating method according to any one of claims 1 to 9, further comprising:

repeating the steps in (1) to (6) plural times; and
generating position data corresponding to a plurality of linear objects by linking a plurality of compressed starting-point blocks, a plurality of compressed angle/marker blocks and a plurality of compressed incidental-code blocks and then linking all blocks, in step in (7).

12. A program for causing a computer to execute respective steps set forth in claims 1 to 11.

13. A linear object position data generating system, comprising:

a resample processing portion for resampling a linear object at a predetermined resample length with a starting point of the linear object as a reference;
an angular information acquiring portion for acquiring angular information of a plurality of resample points on the linear object being set by the sample;
a marker setting portion for setting markers to represent additional information corresponding to at least one resample point;
an incidental code value deciding portion for deciding incidental code values to represent incidental codes of the angular information and the markers;
a starting-point block generating portion for generating a starting-point block containing starting-point data corresponding to a starting point;
a first angle/marker block generating portion for generating an angle/marker block containing the angular information and the markers;

a second angle/marker block generating portion for generating an incidental-code block containing the incidental code values;

a starting-point block compressing portion for compressing the starting-point block;

an angle/marker block compressing portion for compressing the angle/marker block;

an incidental-code block compressing portion for compressing the incidental-code block;

a block linking portion for linking the compressed starting-point block, the compressed angle/marker block, and the compressed incidental-code block; and

a data transmitting portion for transmitting position data of the linear object obtained by the block linking portion.

# FIG. 1 (a)

STARTING POINT
(LATITUDE/LONGITUDE)

ABSOLUTE
ANGLE

RESAMPLE LENGTH
CHANGING POINT

REFERENCE POINT

RESAMPLE LENGTH A

ROAD INCIDENTAL
CODE CHANGING POINT

END POINT
OF ROAD

RESAMPLE LENGTH B

FRACTION PART AS
A REMAINDER OF THE
RESAMPLE LENGTH B

RESAMPLE POINT

# FIG. 1 (b)

REFERENCE POINT

RESAMPLE LENGTH
CHANGING POINT

OFFSET

RESAMPLE LENGTH A

OFFSET

ROAD INCIDENTAL
CODE CHANGING POINT

RESAMPLE LENGTH B

OFFSET

END POINT
OF ROAD

RESAMPLE POINT

EP 1 818 892 A1

## FIG. 2

| Symbol Value | | Meaning Of Value | Necessary Reproducing Precision D | Additional Bit Number [Incidental Code] | | |
| --- | --- | --- | --- | --- | --- | --- |
| | | | | #1 | #2 | #3 |
| Angle | 0 | Value of Angle | - None - | - None - | - None - | - None - |
| | 1 | ↓ | ↓ | 1[+or-] | - None - | - None - |
| | 2 | ↓ | ↓ | 1[+or-] | - None - | - None - |
| | ∫ | | | | | |
| | 30 | ↓ | ↓ | 1[+or-] | - None - | - None - |
| | ∫ | | | | | |
| | 180 | Value of Angle | ↓ | 1[+or-] | - None - | - None - |
| Marker | 181 | - Not Defined - | ↓ | | | |
| | 182 | ↓ | ↓ | | | |
| | ∫ | | | | | |
| | 249 | ↓ | ↓ | | | |
| | 250 | - Not Defined - | ↓ | | | |
| | 251 | Predictive Formula Change Marker | ↓ | 2 [predictive formula] | - None - | - None - |
| | 252 | Resample Length Change Marker | - None - | 3[length] | - None - | - None - |
| | 253 | Reference Point Marker | 3m | Variable [Offset] | - None - | - None - |
| | 254 | Road Incidental Code Change Marker | 3m | 3[class] | 3[function] | Variable [Offset] |
| | 255 | End Marker | 5m | Variable [Offset] | - None - | - None - |

EP 1 818 892 A1

# FIG. 3

PROFILE OF ID=1

| POSITION CODE ID | STARTING POINT (LONGITUDE) | STARTING POINT (LATITUDE) | ABSOLUTE ANGLE | MAIN BODY | INFORMATION AFTER DATA #2 |
|---|---|---|---|---|---|

EXPRESSION OF ANGLE-MARKER SYMBOL AND CORRESPONDING INCIDENTAL CODE BY ARRAY

| RESAMPLE LENGTH CHANGE MARKER | RESAMPLE LENGTH CODE [3 BIT] | PREDICTIVE FORMULA CHANGE MARKER | PREDICTIVE FORMULA CODE [2 BIT] | ROAD INCIDENTAL CODE CHANGE MARKER | CLASS CODE FUNCTION CODE OFFSET | NODE 1 ANGLE (QUANTUM ANGLE VALUE) | NONE OR +/- [1BIT] | NODE 2 ANGLE (QUANTUM ANGLE VALUE) | NONE OR +/- [1BIT] | ... | RESAMPLE LENGTH CHANGE MARKER | PREDICTIVE FORMULA CODE [2 BIT] | ... | NODE N ANGLE (QUANTUM ANGLE VALUE) | NONE OR +/- [1BIT] | END MARKER | OFFSET |
|---|---|---|---|---|---|---|---|---|---|---|---|---|---|---|---|---|---|

ANGLE/MARKER SYMBOL        ANGLE/MARKER SYMBOL

INCIDENTAL CODE CORRESPONDING TO SYMBOL        INCIDENTAL CODE CORRESPONDING TO SYMBOL

| POSITION CODE ID | STARTING POINT (LONGITUDE) | STARTING POINT (LATITUDE) | ABSOLUTE ANGLE | RESAMPLE LENGTH CHANGE MARKER | RESAMPLE LENGTH CODE [3 BIT] | PREDICTIVE FORMULA CHANGE MARKER | PREDICTIVE FORMULA CODE [2 BIT] | ROAD INCIDENTAL CODE CHANGE MARKER | CLASS CODE FUNCTION CODE OFFSET | NODE 1 ANGLE (QUANTUM ANGLE VALUE) | NONE OR +/- [1BIT] | NODE 2 ANGLE (QUANTUM ANGLE VALUE) | NONE OR +/- [1BIT] | ... | END MARKER | OFFSET |
|---|---|---|---|---|---|---|---|---|---|---|---|---|---|---|---|---|

FIG. 4 (A) STARTING POINT BLOCK

FIG. 4 (B) ANGLE/MARKER BLOCK

FIG. 4 (C) INCIDENTAL-CODE BLOCK

| POSITION CODE ID | STARTING POINT (LONGITUDE) | STARTING POINT (LATITUDE) | ABSOLUTE ANGLE |
|---|---|---|---|

| RESAMPLE LENGTH CHANGE MARKER | PREDICTIVE FORMULA CHANGE MARKER | ROAD INCIDENTAL CODE CHANGE MARKER | NODE 1 ANGLE (QUANTUM ANGLE VALUE) | NODE 2 ANGLE (QUANTUM ANGLE VALUE) | ... | END MARKER |
|---|---|---|---|---|---|---|

| RESAMPLE LENGTH CODE [3 BIT] | PREDICTIVE FORMULA CODE [2 BIT] | CLASS CODE FUNCTION CODE OFFSET | NONE OR +/- [1BIT] | NONE OR +/- [1BIT] | ... | OFFSET |
|---|---|---|---|---|---|---|

# FIG. 5

# FIG. 6

| ANGLE/MARKER SYMBOL | RESAMPLE LENGTH CHANGE MARKER | PREDICTIVE FORMULA CHANGE MARKER | ROAD INCIDENTAL CODE CHANGE MARKER | NODE 1 ANGLE=3 (QUANTUM ANGLE VALUE) | NODE 2 ANGLE=0 (QUANTUM ANGLE VALUE) | ... | END MARKER |

| NUMBER OF INCIDENTAL-CODE BITS => | RESAMPLE LENGTH CODE [3 BIT] | PREDICTIVE FORMULA CODE [2 BIT] | CLASS CODE=3 FUNCTION CODE=3 OFFSET= CALCULATED FROM THE RESAMPLE LENGTH | POSITIVE/ NEGATIVE SIGN=1 BIT | NONE | ... | OFFSET= CALCULATED FROM THE RESAMPLE LENGTH |

2 BYTES

| INCIDENTAL CODE DATA ALIGNMENT | NULL | NULL | NULL | NULL | NULL | ... | NULL |

PACKING INTO EFFICIENT BITS    ...    <= FILLER IS ADDED TO THE END TO HAVE A BYTE BOUNDARY

EP 1 818 892 A1

## FIG. 7 (a)

| HEADER | STARTING-POINT BLOCK<br>(POSITION CODE ID/LATITUDE/<br>LONGITUDE/ABSOLUTE ANGLE) | ANGLE/MARKER BLOCK | INCIDENTAL-CODE BLOCK |
|---|---|---|---|

## FIG. 7 (b)

| HEADER | POSITION CODE ID | LATITUDE/LONGITUDE | ABSOLUTE ANGLE | COMPRESSED DATA |
|---|---|---|---|---|

EP 1 818 892 A1

# FIG. 8 (a)

STARTING POINT BLOCK

LR-ID=1 / LR-ID=2

| POSITION CODE ID | STARTING POINT (LONGITUDE) | STARTING POINT (LATITUDE) | ABSOLUTE ANGLE | POSITION CODE ID | STARTING POINT (LONGITUDE) | STARTING POINT (LATITUDE) | ABSOLUTE ANGLE | ... |

# FIG. 8 (b)

ANGLE/MARKER BLOCK

LR-ID=1 / LR-ID=2

| RESAMPLE LENGTH CHANGE MARKER | PREDICTIVE FORMULA CHANGE MARKER | ROAD INCIDENTAL CODE CHANGE MARKER | NODE 1 ANGLE | NODE 2 ANGLE | ... | END MARKER | RESAMPLE LENGTH CHANGE MARKER | PREDICTIVE FORMULA CHANGE MARKER | ROAD INCIDENTAL CODE CHANGE MARKER | NODE 1 ANGLE | NODE 2 ANGLE | ... | END MARKER | ... |

# FIG. 8 (c)

INCIDENTAL-CODE BLOCK

LR-ID=1 / LR-ID=2

| RESAMPLE LENGTH CODE [3 BIT] | PREDICTIVE FORMULA CODE [2 BIT] | CLASS CODE FUNCTION CODE OFFSET | NONE OR +/- [1BIT] | NONE OR +/- [1BIT] | ... | OFFSET | RESAMPLE LENGTH CODE [3 BIT] | PREDICTIVE FORMULA CODE [2 BIT] | CLASS CODE FUNCTION CODE OFFSET | NONE OR +/- [1BIT] | NONE OR +/- [1BIT] | ... | OFFSET | ... |

EP 1 818 892 A1

FIG. 9

INFORMATION UTILIZING EQUIPMENT

INFORMATION UTILIZING PORTION ~260

CODED DATA DECODING PORTION

STARTING-POINT BLOCK DECODING PORTION ~220

221

227

240    230

POSITION IDENTIFYING PORTION    DATA RESTORING PORTION    DATA ARRAY DECODING PORTION    ANGLE/MARKER BLOCK DECODING PORTION

210

DATA RECEIVING PORTION

223

DIGITAL MAP DATABASE B ~250

INCIDENTAL CODE VALUE BLOCK DECODING PORTION

225

200

300

INFORMATION TRANSMITTING EQUIPMENT

100

VARIABLE-LENGTH CODING PROCESSING PORTION

DIGITAL MAP DATABASE A    130

STARTING-POINT BLOCK COMPRESSING PORTION

163

169    ~160

170

DATA TRANSMITTING PORTION    BLOCK LINKING PORTION    ANGLE/MARKER BLOCK COMPRESSING PORTION    161    DATA DISASSEMBLING PORTION    140    RESAMPLE PROCESSING PORTION    120    DATA EXTRACTING PORTION    110    EVENT INFORMATION INPUTTING PORTION

165

OFFSET CALCULATING PORTION ~150

INCIDENTAL CODE VALUE BLOCK COMPRESSING PORTION

167

EP 1 818 892 A1

## FIG. 10

```
            ┌──────────────┐
            │    START     │
            └──────┬───────┘
                   │
            ┌──────▼───────┐
            │     N=1      │──── S100
            └──────┬───────┘
                   │
     ┌──────▶┌──────▼───────┐
     │       │ RECEIVE N-TH │──── S200
     │       │  ROAD DATA   │
     │       └──────┬───────┘
     │              │
     │       ┌──────▼───────┐
     │       │ SEPARATE INTO│──── S300
     │       │ THREE BLOCKS │
     │       └──────┬───────┘
     │              │
     │       ┌──────▼───────┐
     │       │  COMPRESS A  │──── S400
     │       │STARTING-POINT│
     │       │    BLOCK     │
     │       └──────┬───────┘
     │              │
     │       ┌──────▼───────┐
     │       │ COMPRESS AN  │──── S500
     │       │ANGLE/MARKER  │
     │       │    BLOCK     │
     │       └──────┬───────┘
     │              │
 ┌───────┐   ┌──────▼───────┐
 │ N=N+1 │   │COMPRESS AN   │──── S600
 └───▲───┘   │INCIDENTAL    │
  S900       │CODE VALUE    │
     │       │BLOCK         │
     │       └──────┬───────┘
     │              │
     │       ┌──────▼───────┐
     │       │ LINK THREE   │──── S700
     │       │   BLOCKS     │
     │       └──────┬───────┘
     │              │
     │          S800◇
     │  NO  ╱           ╲
     └─────◀ ALL ROAD DATA ENDED ?
            ╲           ╱
               ◇───┬───◇
                   │ YES
            ┌──────▼───────┐
            │     END      │
            └──────────────┘
```

*FIG. 11*

```
                    ┌─────────────┐
                    │    START    │
                    └──────┬──────┘
                           │
                    ┌──────▼──────┐
                    │     M=1     │───S610
                    └──────┬──────┘
                           │
                    ┌──────▼──────┐
          ┌────────►│ EXTRACT M-TH SYMBOL │───S620
          │         └──────┬──────┘
          │                │
          │         ┌──────▼──────┐
          │         │ DECIDE AN INCIDENTAL │───S630
          │         │  CODE VALUE  │
          │         └──────┬──────┘
          │                │
          │              S640
          │         ◇─────────────◇        NO
          │         │ ACCOMPANIED WITH OFFSET ? ├────┐
          │         ◇─────────────◇             │
          │                │ YES                 │
          │         ┌──────▼──────┐              │
          │         │  DECIDE A   │───S650        │
          │         │ RESAMPLE LENGTH │           │
          │         └──────┬──────┘              │
          │              S660                  S665
  ┌───────┴───┐    ┌──────▼──────┐      ┌──────▼──────┐
  │  M=M+1    │    │  DECIDE THE │      │  DECIDE THE │
  │           │    │ NECESSARY BIT NUMBER │  │ NECESSARY BIT NUMBER │
  └───────────┘    └──────┬──────┘      └──────┬──────┘
     S690                 │                    │
          │         ┌──────▼──────┐◄───────────┘
          │         │  ADD TO AN  │───S670
          │         │ INCIDENTAL-CODE BLOCK │
          │         └──────┬──────┘
          │              S680
          │    NO   ◇─────────────◇
          └─────────┤ ALL ROAD DATA ENDED ? │
                    ◇─────────────◇
                           │ YES
                    ┌──────▼──────┐
                    │     END     │
                    └─────────────┘
```

## FIG. 12

```
                    ┌─────────────────┐
                    │      START      │
                    └─────────────────┘
                             │
                             ▼
                    ┌─────────────────┐
                    │       L=1       │───S11
                    └─────────────────┘
                             │
                             ▼
                    ┌─────────────────┐
                    │ EXTRACT L-TH    │
                    │ SYMBOL          │───S12
                    │ WITH OFFSET     │
                    └─────────────────┘
                             │
                             ▼
                    ┌─────────────────┐
                    │ CALCULATE A     │
                    │ DISTANCE        │
                    │ S FROM AN       │───S13
                    │ UPSTREAM        │
                    │ SIDE RESAMPLE   │
                    │ POINT           │
                    └─────────────────┘
                             │
                             ▼
                    ┌─────────────────┐
                    │  CALCULATE S/D  │───S14
                    └─────────────────┘
                             │
                             ▼
  ┌──────────┐      ┌─────────────────┐
  │  L=L+1   │─S18  │ SET A MARKER    │
  └──────────┘      │ JUST AFTER THE  │───S15
        ▲           │ UPSTREAM        │
        │           │ SIDE RESAMPLE   │
        │           │ POINT           │
        │           └─────────────────┘
        │                    │
        │                    ▼
        │           ┌─────────────────┐
        │           │ SET AN OFFSET   │
        │           │ AS AN           │───S16
        │           │ INCIDENTAL      │
        │           │ CODE VALUE      │
        │           └─────────────────┘
        │                    │
        │                    ▼
        │                  S17
        │           ◇─────────────────◇
        │    NO     │      ALL         │
        └───────────│ SYMBOLS WITH     │
                    │ OFFSET ENDED     │
                    │       ?          │
                    ◇─────────────────◇
                             │ YES
                             ▼
                    ┌─────────────────┐
                    │       END       │
                    └─────────────────┘
```

(a)

$\theta_j$
$\theta_{j-1}$
$P_J$
$P_{J-1}$
L
L
L

RESAMPLE LOCUS DATA
AT A CONSTANT DISTANCE L

(b)

L
L
$\theta_j$
$\theta_{j-1}$
$P_J$
$P_{J-1}$
L
L

REPRESENT AN ANGLE COMPONENT
BY A DEFLECTION ANGLE

(c)

L
$S_j$
$\Delta\theta_j$
L
$\theta_{j-1}$
$P_J$
$P_{J-1}$
L
L

REPRESENT A DEFLECTION ANGLE
BY A PREDICTIVE DIFFERENCE VALUE

(d)

FREQUENCY OF OCCURRENCE

$\theta, \Delta\theta$
-180°    0°    +180°

FIG. 13

EP 1 818 892 A1

# FIG. 14

EXAMPLE OF CODE TABLE

| SPECIAL CODE | | CODE | ADDITIONAL BIT | |
|---|---|---|---|---|
| EOD CODE | | 1100 | 0 | |
| INPUT VALUE | | CODE | ADDITIONAL BIT | RANGE OF A $\Delta\theta$ VALUE (°) |
| RUN LENGTH | $\Delta\theta$ VALUE (°) | | | |
| 0 | 0 | 0 | 0 | −1~+1 |
| 5 | 0 | 100 | 0 | // |
| 10 | 0 | 1101 | 0 | // |
| 0 | ±3 | 1110 | 1 (±IDENTIFICATION) | ±2~4 |
| 0 | ±6 | 111100 | 1 (±IDENTIFICATION) | ±5~7 |
| 0 | ±9 | 111101 | 1 (±IDENTIFICATION) | ±8~10 |
| ⸮ | | | | |

# FIG. 15

A: BLOCK THAT IS CONSTANT DISTANT-RESAMPLED BY L1 (>L2)

ROAD PROFILE

B: BLOCK THAT IS CONSTANT DISTANT-RESAMPLED BY L2 (<L1)

EP 1 818 892 A1

## INTERNATIONAL SEARCH REPORT

| | International application No. |
|---|---|
| | PCT/JP2005/022014 |

A. CLASSIFICATION OF SUBJECT MATTER
*G09B29/00*(2006.01), *G01C21/00*(2006.01), *H03M7/40*(2006.01)

According to International Patent Classification (IPC) or to both national classification and IPC

B. FIELDS SEARCHED

Minimum documentation searched (classification system followed by classification symbols)
G09B29/00, G01C21/00, H03M7/40

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br><br>A | JP 2002-149710  A (Dezain Otomeshon Kabushiki Kaisha),<br>24 May, 2002 (24.05.02),<br>Par. Nos. [0028], [0032]; Figs. 1, 2<br>(Family: none) | 1-5,7-9, 11-13<br>6,10 |
| Y<br><br>A | JP 2003-023357 A (Matsushita Electric Industrial Co., Ltd.),<br>24 January, 2003 (24.01.03),<br>Par. Nos. [0012] to [0107], [0120] to [0126]<br>& US 2003/0093221 A1     & EP 1385269 A1<br>& WO 2002/091587 A1      & CA 2443268 A | 1-5,7-9, 11-13<br>6,10 |

☐  Further documents are listed in the continuation of Box C.          ☐  See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 28 February, 2006 (28.02.06) | 07 March, 2006 (07.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003023357 A